# FASCICULE DE BREVET EUROPEEN

(11) **EP 1 714 335 B1**
(45) Date de publication et mention de la délivrance du brevet: **11.04.2018**
(21) Numéro de dépôt: 05717590.3
(22) Date de dépôt: 09.02.2005
(51) Int. Cl.: H01M 10/058, H01M 10/0525, H01M 10/0565, H01M 4/485

(54) **PROCEDE D ELABORATION D UN DISPOSITIF ELECTROCHIMIQUE.**
VERFAHREN ZUM ENTWICKELN EINER ELEKTROCHEMISCHEN EINRICHTUNG
METHOD FOR DEVELOPING AN ELECTROCHEMICAL DEVICE

(30) Priorité: 10.02.2004 FR 0401285
(43) Date de publication de la demande: 25.10.2006
(73) Titulaire: Blue Solutions, 29500 Ergué Gabéric (FR)
(72) Inventeur: DESCHAMPS, Marc, F-29000 QUIMPER (FR)
(74) Mandataire: Goulard, Sophie
(86) Numéro de dépôt international: PCT/FR2005/000289
(87) Numéro de publication internationale: WO 2005/078827

(56) Documents cités:
- EP-A- 1 339 128
- JP-A- 2005 085 675
- US-A- 5 552 239
- US-A- 5 622 792
- US-A- 5 888 672
- PATENT ABSTRACTS OF JAPAN vol. 2003, no. 02, 5 février 2003 (2003-02-05) -& JP 2002 298919 A (SANYO ELECTRIC CO LTD), 11 octobre 2002 (2002-10-11)
- PATENT ABSTRACTS OF JAPAN vol. 1997, no. 03, 31 mars 1997 (1997-03-31) -& JP 08 298136 A (FUJI PHOTO FILM CO LTD), 12 novembre 1996 (1996-11-12)
- PATENT ABSTRACTS OF JAPAN vol. 2000, no. 07, 29 septembre 2000 (2000-09-29) -& JP 2000 106212 A (YUASA CORP), 11 avril 2000 (2000-04-11)

## Description

La présente invention concerne un procédé d'élaboration d'un système électrochimique à électrolyte solide polymère ou à électrolyte gélifié.

Les systèmes électrochimiques de stockage d'énergie, par exemple les batteries ou les supercapacités, qui fonctionnent avec des tensions élémentaires élevées exigent des électrolytes qui ont un domaine de stabilité étendu. De tels électrolytes sont obtenus par dissolution d'un ou plusieurs composés ioniques dans un solvant liquide polaire, un polymère solvatant, ou leurs mélanges. Les systèmes électrochimiques dans lesquels l'électrolyte contient un sel de lithium et un solvant polymère du type polyéther sont particulièrement intéressants. De tels systèmes, qui fonctionnent par circulation d'ions lithium à travers un électrolyte entre une anode et une cathode, peuvent être constitués par deux électrodes sous forme de films entre lesquels l'électrolyte également sous forme de film est confiné, l'ensemble multi-couche ainsi formé étant enroulé. Toutefois, l'élaboration d'un tel dispositif pose des problèmes. D'une part, les sels de lithium sont généralement hygroscopiques, et la préparation du matériau polyéther/sel de lithium doit être effectuée en atmosphère anhydre. D'autre part, un polyéther est un polymère faiblement cristallin qui, en mélange avec un sel de lithium, forme un complexe constituant un matériau collant. De ce fait, l'élaboration d'un film de matériau polyéther/sel de lithium par extrusion est difficile. Pour pallier cet inconvénient, il a été proposé d'utiliser des films supports, afin d'éviter que le film polyéther/sel de lithium ne se colle sur lui-même. Cependant, lorsque l'on veut retirer le film support, la forte adhérence entre le film support et le film d'électrolyte provoque des déchirements qui rendent l'électrolyte inutilisable.

US 5552239 décrit un procédé d'élaboration d'une batterie consistant à assembler de films sans sel de lithium, le sel de lithium étant ajouté ensuite par imprégnation de la batterie par une solution de sel de lithium.

US 55622792 décrit un procédé d'élaboration d'une batterie avec la formation d'un film électrolyte avec un sel de lithium et un additif par extrusion. Les inventeurs ont constaté que, de manière surprenante, un film de polyéther qui ne contient pas de sel peut être préparé par extrusion et protégé par un film support avant son utilisation finale, ledit film support pouvant être détaché du film de polyéther sans le dégrader, du fait de la faible adhérence entre le polyéther et le film support.

La présente invention a pour but de fournir un procédé simple pour l'élaboration de systèmes électrochimiques comprenant un électrolyte polyéther/sel de lithium.

Le procédé selon l'invention et selon les revendications déposées, pour l'élaboration d'un dispositif électrochimique constitué par un film d'électrolyte polyéther/sel de lithium entre deux films constituant respectivement l'électrode positive et l'électrode négative, consiste à assembler une structure multi-couche comprenant un support collecteur de courant, un film destiné à former l'électrode positive, un film de polyéther (désigné ci-après par film de polyéther initial) et un film destiné à former l'électrode négative. Il est caractérisé en ce que :
- le film destiné à former l'électrode positive et/ou le film destiné à former l'électrode négative sont constitués par un matériau composite contenant le sel de lithium ;
- le film de polyéther initial ne contient pas de sel de lithium ;
- le dispositif assemblé est laissé au repos pendant un temps suffisant pour permettre au sel de lithium contenu dans le matériau de l'électrode positive et/ou dans le matériau de l'électrode négative de diffuser dans le film de polyéther initial.

Dans ce type de dispositif électrochimique, les films constituant respectivement l'électrode négative, l'électrode positive et l'électrolyte ont des épaisseurs comprises entre 10 µm et 150 µm. Compte tenu de la faible épaisseur de ces films, la diffusion des ions lithium dans le film de polyéther est suffisante pour éviter le gradient de concentration en sel dans ledit film. L'étape de diffusion peut être effectuée à température ambiante. La diffusion peut être accélérée en augmentant la température.

Comme exemples de polyéthers utilisables dans le cadre de la présente invention pour le film destiné à former l'électrolyte, on peut citer notamment les copolymères qui sont obtenus à partir d'oxyde d'éthylène et d'au moins un oxirane substitué, et qui comprennent au moins 70% d'unités récurrentes -CH₂-CH₂O- dérivées de l'oxyde d'éthylène.

Les unités récurrentes dérivées d'un oxirane substitué peuvent être des unités -O-CH₂-CHR- (dérivées d'un oxirane C̅H̅₂̅ -̅ C̅H̅R̅ -̅ O̅) dans lesquelles R est un radical alkyle, choisi de préférence parmi les radicaux alkyles ayant de 1 à 16 atomes de carbone, plus préférentiellement parmi les radicaux alkyles ayant de 1 à 8 atomes de carbone.

Les unités récurrentes dérivées d'un oxirane substitué peuvent en outre être des unités -O-CH₂CHR'- (dérivées d'un oxirane C̅H̅₂̅-̅C̅H̅R̅'̅-̅O̅), dans lesquelles R' est un groupement capable de polymériser par voie radicalaire. Un tel groupement peut être choisi parmi ceux qui comportent une double liaison, par exemple un groupe vinyle, allyle, vinylbenzyle ou acryloyle. Comme exemples de tels groupements, on peut citer les groupements qui répondent à la formule CH₂=CH-(CH₂)_{q}-(O-CH₂)ₚ avec 1≤q≤6 et p=0 ou 1, ou à la formule CH₃- (CH₂)_{y}-CH=CH-(CH₂)ₓ-(OCH₂)ₚ, avec 0≤x+y≤5 et p=0 ou 1.

Un polyéther utile pour la présente invention peut comporter des unités récurrentes dérivées de divers oxiranes substitués.

De préférence, le polyéther utilisé selon la présente invention comporte des unités récurrentes dérivées d'au moins un oxirane substitué dans lequel le substituant comprend une fonction polymérisable. A titre d'exemple, on peut citer l'allylglycidyléther.

Le sel de lithium peut être choisi notamment parmi LiPF₆, LiAsF₆, LiClO₄, LiBF₄, LiC₄BO₈, Li (C₂F₅SO₂)₂N, Li[(C₂F₅)₃PF₃], LiCF₃SO₃, LiCH₃SO₃, et LiN (SO₂CF₃)₂.

Le matériau composite du film destiné à former l'électrode positive comprend une matière active, un liant, le sel de lithium, et éventuellement un matériau conférant une conductivité électronique.

La matière active d'électrode positive peut être choisie notamment parmi Li₁₊ₓV₃O₈, 0<x<4, LiₓV₂O₅,nH₂O, (0<x<3, 0<n<2), LiFePO₄, les phosphates et les sulfates de fer hydratés ou non, les phosphates et les sulfates de vanadyle hydratés ou non [par exemple VOSO₄ et LiₓVOPO₄, nH₂O (0<n<3, 0<x<2)], LiMn₃O₄, les composés dérivés de ZiMn₂O₄ obtenus par substitution partielle de Mn de préférence par Al, Ni et/ou Co, LiMnO₂, les composés dérivés de LiMnO₂ obtenus par substitution partielle de Mn de préférence par Al, Ni et/ou Co, LiCoO₂, les composés dérivés de LiCoO₂ obtenus par substitution partielle de Li de préférence par Al, Ti, Mg, Ni et/ou Mn [par exemple LiAlₓNi_{y}CO_{(1-x-y)}O₂, (x<0,5, y<1)], LiNiO₂, et les composés dérivés de LiNiO₂ par substitution partielle de Ni de préférence par Al, Ti, Mg et/ou Mn.

Le liant de l'électrode positive est un liant organique électrochimiquement stable jusqu'à un potentiel de 4 V vs Li. Ledit liant peut être constitué soit par un polymère non solvatant et au moins un composé polaire aprotique, soit par un polymère solvatant.

Le composé polaire aprotique peut être choisi parmi les carbonates linéaires ou cycliques, les éthers linéaires ou cycliques, les esters linéaires ou cycliques, les sulfones linéaires ou cycliques, les sulfamides et les nitriles.

Le polymère non solvatant peut être choisi parmi :
- les homopolymères et les copolymères de fluorure de vinylidène,
- les copolymères d'éthylène, de propylène et d'un diène,
- les homopolymères et les copolymères de tétrafluoroéthylène,
- les homopolymères et les copolymères de N-vinyl-pyrrolidone,
- les homopolymères et les copolymères d'acrylonitrile
- les homopolymères et les copolymères de méthacrylonitrile.

Le polymère non solvatant peut porter des fonctions ioniques. A titre d'exemple d'un tel polymère, on peut citer les sels de polyperfluoroéther sulfonate, dont certains sont commercialisés sous la dénomination Nafion®, et les sels de polystyrène sulfonate.

Lorsque le liant est un polymère solvatant, il confère au matériau des propriétés de conduction ionique et une meilleure tenue mécanique. Comme exemples de polymères solvatants, on peut citer les polyéthers de structure linéaire, peigne ou à blocs, formant ou non un réseau, à base de poly(oxyde d'éthylène) ; les copolymères contenant le motif oxyde d'éthylène ou oxyde de propylène ou allylglycidyléther ; les polyphosphazènes ; les réseaux réticulés à base de polyéthylène glycol réticulé par des isocyanates ; les copolymères d'oxyéthylène et d'épichlorhydrine ; et les réseaux obtenus par polycondensation et portant des groupements qui permettent l'incorporation de groupements réticulables. Les copolymères d'oxyde d'éthylène et d'un comonomère réticulable sont particulièrement préférés comme liant du matériau composite de l'électrode positive conférant la conduction ionique et les propriétés mécaniques.

Le composé conférant des propriétés de conduction électronique est de préférence un noir de carbone qui ne catalyse pas l'oxydation de l'électrolyte à potentiel élevé. De nombreux noirs de carbone du commerce répondent à cette condition. On peut citer en particulier le composé Ensagri Super S® commercialisé par la société Chemetals.

Le film destiné à former l'électrode négative du dispositif électrochimique élaboré selon le procédé de la présente invention peut être constitué par un film de lithium. Il peut en outre être constitué par un matériau composite contenant une matière active d'électrode négative, le sel de lithium, un liant, et éventuellement un composé conférant une conductivité électronique. La matière active est choisie notamment parmi :
- les composés carbonés (graphites naturels ou synthétiques, carbones désordonnés, etc.),
- les alliages avec le lithium de type LiₓM (M=Sn, Sb, Si...) (obtenus à partir de SnO, de SnO₂, de composés de Sn, Sn-Fe(-C), de composés du Si, de composés de Sb), ou
- les composés LiₓCu₆Sn₅ (0<x<13), les borates de fer, les pnictures (par exemple Li_{3-x-y}Co_{y}N, Li_{3-x-y}Fe_{y}N, LiₓMnP₄, LiₓFeP₂, LiₓFeSb₂,...), les oxydes simples à décomposition réversible (par exemple CoO, Co₂O₃, Fe₂O₃, ...), et les oxydes à insertion tels que les titanates (par exemple TiO₂, Li₄Ti₅O₁₂), MoO₃ ou WO₃.

Le liant d'une électrode composite négative peut être choisi parmi les liants définis ci-dessus pour l'électrode positive. De même, le composé conférant une conductivité électronique à l'électrode négative peut être choisi parmi les composés définis pour l'électrode positive.

Le matériau destiné à former l'une et/ou l'autre des électrodes peut contenir en outre un solvant organique liquide non volatil. Dans ce cas particulier, ledit solvant liquide migre dans le film de polyéther lors de l'étape de repos du procédé d'élaboration. Le film d'électrolyte finalement contenu dans le dispositif électrochimique est alors un film gélifié. Dans ce cas particulier, le polyéther est de préférence un copolymère comportant des unités réticulables, qui après réticulation, conserve une tenue mécanique suffisante en présence du solvant liquide. Ledit solvant liquide peut être choisi notamment parmi :
- les composés polaires aprotiques tels que les carbonates linéaires ou cycliques, les éthers linéaires ou cycliques, les esters linéaires ou cycliques, les sulfones linéaires ou cycliques, les sulfamides et les nitriles,
- les phtalates tels que le phtalate de dioctyle, le phtalate de dibutyle, et le phtalate de diméthyle,
- un polyéthylène glycol ou poly(éthylène glycol) diméthyl éther de faible masse.

Lorsque le polyéther du film destiné à former l'électrolyte est un copolymère comprenant des unités réticulables, la (les) électrode(s) qui est(sont) constituée(s) par un matériau composite peu(ven)t contenir en outre un agent réticulant pour ledit polyéther. Dans ce cas, lors de l'étape de repos du procédé d'élaboration, ledit agent réticulant migre dans le film de polyéther dont il provoque la réticulation, ce qui améliore la tenue mécanique.

La présente invention est illustrée par les exemples suivants, auxquels elle n'est cependant pas limitée.

### Exemple 1

### Elaboration d'une batterie à électrolyte polymère solide

On a préparé séparément un film destiné à former l'électrolyte et un film destiné à former l'électrode positive d'une batterie au lithium, dont l'anode est constituée par une feuille de lithium.

Le film destiné à former l'électrolyte est un film qui a une épaisseur de 20 pm, et qui est constitué par un copolymère d'oxyde d'éthylène, d'oxyde de propylène et d'allylglycidyléther (AGE), avec un rapport en nombre des unités récurrentes respectives de 94/4/2. Le film destiné à former l'électrode positive est constitué par un matériau composite comprenant LiV₃O₈ comme matière active, du carbone comme agent conférant une conductivité électronique, un mélange poly(fluorure de vinylidène) / hexafluoropropylène (PVDF/HFP) (85/15 en poids) comme liant, LiTFSI comme sel de lithium, et Irganox® commercialisé par la société CIBA Geigy comme antioxydant.

Plusieurs essais ont été effectués, avec des quantités différentes pour les divers constituants. Les six premières colonnes du tableau ci-dessous donnent les pourcentages en poids des constituants de l'électrode positive. "O/Li cathode" représente le rapport atomique O/Li dans l'électrode positive, EpC⁺ représente l'épaisseur du film constituant l'électrode positive, O/Li total représente le rapport atomique O/Li dans la batterie (électrode positive + électrolyte après diffusion).

| POE | LiV₃O₈ | C | Irganox | PVDF /HFP | LiTFSi | O/Li cathode | Ep C+ (µm) | O/Li total |
|---|---|---|---|---|---|---|---|---|
| 20,8 | 54 | 14 | 0,20 | 3,00 | 8 | 17 | 110 | 25,8 |
| 20,58 | 53,43 | 13,85 | 0,20 | 2,97 | 8,98 | 14,95 | 80 | 25,8 |
| 20,22 | 52,49 | 13,61 | 0,19 | 2,92 | 10,57 | 12,5 | 55 | 25,8 |
| 18,50 | 48,03 | 12,45 | 0,18 | 2,67 | 18,18 | 6,6 | 80 | 12 |

Pour chacun des essais, le film de cathode, le film de POE et le film de lithium ont été assemblés en superposant lesdits films dans l'ordre indiqués sur un collecteur de courant, puis en appliquant une pression de 3 bar à une température de 45°C.

Chacune des batteries ainsi constituées a été testée en cyclage sous une tension comprise entre 2 et 3,3 V, avec un courant de décharge de 0,7 mA/cm² et un courant de charge de 0,35 mA/cm².

Les résultats obtenus en matière d'énergie, de puissance et de cyclage sont similaires à ceux qui sont obtenus par des batteries ayant la même constitution, obtenues à partir d'un film de POE dans lequel le sel de lithium a été introduit avant l'assemblage.

### Exemple 2

### Elaboration d'une batterie à électrolyte gélifié selon l'invention

On a préparé séparément un film destiné à former l'électrolyte et un film destiné à former l'électrode positive d'une batterie au lithium, dont l'anode est une feuille de lithium.

Le film destiné à former l'électrolyte est un film qui a une épaisseur de 20 µm et qui a été obtenu par extrusion d'un mélange constitué par 99% en poids d'un copolymère d'oxyde d'éthylène, d'oxyde de propylène et d'AGE analogue à celui utilisé dans l'exemple 1 et 1% en poids d'agent réticulant Irgacure® commercialisé par la société Ciba Geigy.

Le film destiné à former l'électrode positive (CG) a une épaisseur de 80 µm et il est constitué par un matériau ayant la composition suivante :
- LiV₃O₈ : 45 % en poids
- Carbone : 12% en poids
- PVDF/HFP : 15% en poids
- Solution 1M de LiTFSI dans un mélange EC/PC (1/1) : 28% en poids.

Les trois films ont été appliqués sur un collecteur de courant pour obtenir une batterie ayant la configuration suivante : Li/POE/CG/collecteur de courant.

Après un temps de repos de 1 h, la batterie fonctionne à température ambiante, ce qui signifie que la solution de TFSI contenue dans le film initial de l'électrode positive a imprégné le film POE qui est devenu un électrolyte gélifié.

La résistivité à température ambiante de l'électrolyte de cette batterie, déterminée par mesure d'impédance, est de l'ordre de 10 Ω.cm². Ce résultat confirme que l'électrolyte liquide a diffusé dans la membrane polymère et l'a gélifiée.

## Revendications

1. Procédé pour l'élaboration d'un dispositif électrochimique constitué par un film d'électrolyte polyéther/sel de lithium entre deux films constituant respectivement l'électrode positive et l'électrode négative, consistant à assembler une structure multi-couche comprenant un support collecteur de courant, un film destiné à former l'électrode positive, un film de polyéther destiné à former l'électrolyte et un film destiné à former l'électrode négative, **caractérisé en ce que** :
- le film destiné à former l'électrode positive et/ou le film destiné à former l'électrode négative sont constitués par un matériau composite contenant le sel de lithium ;
- le film de polyéther destiné à former l'électrolyte ne contient pas de sel de lithium et est obtenu par extrusion ;
- les films constituant respectivement l'électrode négative, l'électrode positive et l'électrolyte ont des épaisseurs comprises entre 10 µm et 150 µm ;
- le dispositif assemblé est laissé au repos pendant un temps suffisant pour permettre au sel de lithium contenu dans le matériau de l'électrode positive et/ou dans le matériau de l'électrode négative de diffuser dans le film de polymère .

2. Procédé selon la revendication 1, **caractérisé en ce que** le polyéther est choisi parmi les copolymères qui sont obtenus à partir d'oxyde d'éthylène et d'au moins un oxirane substitué, et qui comprennent au moins 70% d'unités récurrentes -CH₂-CH₂O- dérivées de l'oxyde d'éthylène.

3. Procédé selon la revendication 2, **caractérisé en ce que** le polyéther comprend des unités -O-CH₂-CHR- dérivées d'un oxirane C̅H̅₂̅ -̅ C̅H̅R̅ -̅ O̅ dans lesquelles R est un radical alkyle.

4. Procédé selon la revendication 3, **caractérisé en ce que** R est un radical alkyle ayant de 1 à 16 atomes de carbone.

5. Procédé selon la revendication 2, **caractérisé en ce que** le polyéther comprend des unités -O-CH₂CHR'- dérivées d'un oxirane C̅H̅₂̅-̅C̅H̅R̅'̅-̅O̅, dans lesquelles R' est un groupement capable de polymériser par voie radicalaire.

6. Procédé selon la revendication 5, **caractérisé en ce que** ledit groupement capable de polymériser par voie radicalaire est choisi parmi ceux qui comportent un groupe vinyle, allyle, vinylbenzyle ou acryloyle.

7. Procédé selon la revendication 2, **caractérisé en ce que** le polyéther comporte des unités récurrentes dérivées de divers oxiranes substitués.

8. Procédé selon la revendication 1, **caractérisé en ce que** le matériau composite du film destiné à former l'électrode positive comprend une matière active, un liant, un matériau conférant une conductivité électronique, et le sel de lithium.

9. Procédé selon la revendication 8, **caractérisé en ce que** la matière active d'électrode positive est choisie parmi Li₁₊ₓV₃O₈, 0<x<4, LiₓV₂O₅, nH₂O, 0<x<3, 0<n<2, LiFePO₄, les phosphates et les sulfates de fer hydratés ou non, les phosphates et les sulfates de vanadyle hydratés ou non, LiMn₂O₄, les composés dérivés de ZiMn₂O₄ obtenus par substitution partielle de Mn par Al, Ni et/ou Co, LiMnO₂, les composés dérivés de LiMnO₂ obtenus par substitution partielle de Mn par Al, Ni et/ou Co, LiCoO₂, les composés dérivés de LiCoO₂ obtenus par substitution partielle de Li par Al, Ti, Mg, Ni et/ou Mn, LiNiO₂, et les composés dérivés de LiNiO₂ par substitution partielle de Ni par Al, Ti, Mg et/ou Mn.

10. Procédé selon la revendication 1, **caractérisé en ce que** le film constituant l'électrode négative est un film de lithium.

11. Procédé selon la revendication 1, **caractérisé en ce que** le film destiné à former l'électrode négative est constitué par un matériau composite qui comprend une matière active, un liant, un matériau conférant une conductivité électronique, et le sel de lithium.

12. Procédé selon la revendication 11, **caractérisé en ce que** la matière active est choisie parmi :
- les composés carbonés,
- les alliages avec le lithium de type LiₓM avec M=Sn, Sb, Si obtenus à partir de SnO, de SnO₂, de composés de Sn, Sn-Fe(-C), de composés du Si, de composés de Sb, ou
- les composés LiₓCu₆Sn₅ 0<x<13, les borates de fer, les pnictures, les oxydes simples à décomposition réversible, et les oxydes à insertion tels que les titanates, MoO₃ ou WO₃.

13. Procédé selon l'une des revendications 1, 8 et 11, **caractérisé en ce que** le sel de lithium est choisi parmi LiPF₆, LiAsF₆, LiClO₄, LiBF₄, LiC₄BO₈, Li(C₂F₅SO₂)₂N, Li[(C₂F₅)₃PF₃], LiCF₃SO₃, LiCH₃SO₃, et LiN (SO₂CF₃)₂.

14. Procédé selon l'une des revendications 8 ou 11, **caractérisé en ce que** le liant est constitué soit par un polymère non solvatant et au moins un composé polaire aprotique, soit par un polymère solvatant.

15. Procédé selon la revendication 14, **caractérisé en ce que** le composé polaire aprotique est choisi parmi les carbonates linéaires ou cycliques, les éthers linéaires ou cycliques, les esters linéaires ou cycliques, les sulfones linéaires ou cycliques, les sulfamides et les nitriles.

16. Procédé selon la revendication 14, **caractérisé en ce que** le polymère non solvatant est choisi parmi :
• les homopolymères et les copolymères de fluorure de vinylidène,
• les copolymères d'éthylène, de propylène et d'un diène,
• les homopolymères et les copolymères de tétrafluoroéthylène,
• les homopolymères et les copolymères de N-vinyl-pyrrolidone,
• les homopolymères et les copolymères d'acrylonitrile
• les homopolymères et les copolymères de méthacrylonitrile.

17. Procédé selon la revendication 14, **caractérisé en ce que** le polymère non solvatant porte des fonctions ioniques.

18. Procédé selon la revendication 14, **caractérisé en ce que** le liant est un polymère solvatant, choisi parmi les polyéthers de structure linéaire, peigne ou à blocs, formant ou non un réseau, à base de poly (oxyde d'éthylène) ; les copolymères contenant le motif oxyde d'éthylène ou oxyde de propylène ou allylglycidyléther ; les polyphosphazènes ; les réseaux réticulés à base de polyéthylène glycol réticulé par des isocyanates ; les copolymères d'oxyéthylène et d'épichlorhydrine ; et les réseaux obtenus par polycondensation et portant des groupements qui permettent l'incorporation de groupements réticulables.

19. Procédé selon l'une quelconque des revendications 8 et 11, **caractérisé en ce que** le composé conférant des propriétés de conduction électronique est de préférence un noir de carbone qui ne catalyse pas l'oxydation de l'électrolyte à potentiel élevé.

20. Procédé selon l'une quelconque des revendications 8 ou 11, **caractérisé en ce que** le matériau composite contient en outre un solvant organique liquide non volatil.

21. Procédé selon la revendication 20, **caractérisé en ce que** ledit solvant liquide est choisi parmi :
• les composés polaires aprotiques tels que les carbonates linéaires ou cycliques, les éthers linéaires ou cycliques, les esters linéaires ou cycliques, les sulfones linéaires ou cycliques, les sulfamides et les nitriles,
• les phtalates tels que le phtalate de dioctyle, le phtalate de dibutyle, et le phtalate de diméthyle,
• un polyéthylène glycol ou poly(éthylène glycol) diméthyl éther de faible masse.

22. Procédé selon la revendication 1, **caractérisé en ce que** le polyéther du film destiné à former l'électrolyte est un copolymère comprenant des unités réticulables, et **en ce que** au moins l'une des électrodes est constituée par un matériau composite qui contient en outre un agent réticulant pour ledit polyéther.

## Patentansprüche

1. Verfahren zum Entwickeln einer elektrochemischen Einrichtung, gebildet von einem Polyether/Lithiumsalz-Elektrolytfilm zwischen zwei Filmen, die jeweils die positive Elektrode und die negative Elektrode darstellen, das darin besteht, eine Mehrschichtstruktur zusammenzusetzen, umfassend einen Stromsammlerträger, einen Film, der bestimmt ist, die positive Elektrode zu bilden, einen Polyetherfilm, der bestimmt ist, den Elektrolyten zu bilden, und einen Film, der bestimmt ist, die negative Elektrode zu bilden, **dadurch gekennzeichnet, dass**:
- der Film, der bestimmt ist, die positive Elektrode zu bilden und/oder der Film, der bestimmt ist, die negative Elektrode zu bilden, aus einem Verbundmaterial bestehen, das das Lithiumsalz enthält,
- der Polyetherfilm, der bestimmt ist, den Elektrolyten zu bilden, kein Lithiumsalz enthält und durch Extrusion hergestellt ist,
- die Filme, die jeweils die negative Elektrode, die positive Elektrode und den Elektrolyten darstellen, Stärken zwischen 10 µm und 150 µm inklusive haben,
- die zusammengesetzte Einrichtung während einer Zeit in Ruhe verbleibt, die ausreichend ist, um dem Lithiumsalz, das im Material der positiven Elektrode und/oder im Material der negativen Elektrode enthalten ist, zu gestatten, in den Polymerfilm zu diffundieren.

2. Verfahren nach Anspruch 1, **dadurch gekennzeichnet, dass** der Polyether aus den Copolymeren ausgewählt ist, die aus Ethylenoxid und mindestens einem substituierten Oxiran hergestellt sind und die mindestens 70 % sich wiederholende Einheiten-CH₂-CH₂O- als Derivate von Ethylenoxid umfassen.

3. Verfahren nach Anspruch 2, **dadurch gekennzeichnet, dass** der Polyether Einheiten -O-CH₂-CHR- als Derivate eines Oxirans C̅H̅₂̅ -̅ C̅H̅R̅ -̅ O̅ umfasst, in denen R ein Alkylradikal ist.

4. Verfahren nach Anspruch 3, **dadurch gekennzeichnet, dass** R ein Alkylradikal mit 1 bis 16 Kohlenstoffatomen ist.

5. Verfahren nach Anspruch 2, **dadurch gekennzeichnet, dass** der Polyether Einheiten -O-CH₂CHR'- als Derivate eines Oxirans C̅H̅₂̅-̅C̅H̅R̅'̅-̅O̅ umfasst, in denen R' eine Gruppe ist, die fähig ist, auf dem Radikalweg zu polymerisieren.

6. Verfahren nach Anspruch 5, **dadurch gekennzeichnet, dass** die Gruppe, die fähig ist, auf dem Radikalweg zu polymerisieren, aus denen ausgewählt ist, die eine Vinyl-, Allyl-, Vinylbenzyl- oder Acryloylgruppe aufweisen.

7. Verfahren nach Anspruch 2, **dadurch gekennzeichnet, dass** der Polyether sich wiederholende Einheiten als Derivate diverser substituierter Oxirane aufweist.

8. Verfahren nach Anspruch 1, **dadurch gekennzeichnet, dass** das Verbundmaterial des Films, der bestimmt ist, die positive Elektrode zu bilden, einen aktiven Stoff, ein Bindemittel, ein Material, das eine elektronische Leitfähigkeit verleiht, und das Lithiumsalz umfasst.

9. Verfahren nach Anspruch 8, **dadurch gekennzeichnet, dass** der aktive Stoff der positiven Elektrode aus Li₁₊ₓV₃O₈, 0<x<4, LiₓV₂O₅, nH₂O, 0<x<3, 0<n<2, LiFePO₄, den hydratisierten Phosphaten und den Sulfaten von Eisen, hydratisiert oder nicht, den Phosphonaten und den Sulfaten von Vanadyl, hydratisiert oder nicht, LiMn₂O₄, den Derivatverbindungen von LiMn₂0₄, erhalten durch teilweise Substitution von Mn durch Al, Ni und/oder Co, LiMn0₂, den Derivatverbindungen von LiMn0₂, erhalten durch teilweise Substitution von Mn durch Al, Ni und/oder Co, LiCoO₂, den Derivatverbindungen von LiCoO₂, erhalten durch teilweise Substitution von Li durch Al, Ti, Mg, Ni und/oder Mn, LiNiO₂ und den Derivatverbindungen von LiNiO₂ durch teilweise Substitution von Ni durch Al, Ti, Mg und/oder Mn ausgewählt ist.

10. Verfahren nach Anspruch 1, **dadurch gekennzeichnet, dass** der Film, der die negative Elektrode darstellt, ein Lithiumfilm ist.

11. Verfahren nach Anspruch 1, **dadurch gekennzeichnet, dass** der Film, der bestimmt ist, die negative Elektrode zu bilden, von einem Verbundmaterial gebildet ist, das einen aktiven Stoff, ein Bindemittel, ein Material, das eine elektronische Leitfähigkeit verleiht, und das Lithiumsalz umfasst.

12. Verfahren nach Anspruch 11, **dadurch gekennzeichnet, dass** der aktive Stoff ausgewählt ist aus:
- den kohlenstoffhaltigen Verbindungen,
- den Legierungen mit dem Lithium vom Typ LiₓM mit M=Sn, Sb, Si, erhalten aus SnO, Sn0₂, Verbindungen von Sn, Sn-Fe(-C), Verbindungen des Si, Verbindungen von Sb oder
- den Verbindungen LiₓCu₆Sn₅ 0<x<13, den Eisenboraten, den Pnictiden, den einfachen Oxiden mit reversiblem Zerfall und den Insertionsoxiden wie den Titanaten, MoO₃ oder WO₃.

13. Verfahren nach einem der Ansprüche 1, 8 und 11, **dadurch gekennzeichnet, dass** das Lithiumsalz aus LiPF₆, LiAsF₆, LiClO₄, LiBF₄, LiC₄BO₈, Li(C₂F₅S0₂)₂N, Li[(C₂F₅)₃PF₃], LiCF₃SO₃, LiCH₃SO₃ und LiN(S0₂CF₃)₂ ausgewählt ist.

14. Verfahren nach einem der Ansprüche 8 oder 11, **dadurch gekennzeichnet, dass** das Bindemittel entweder von einem nicht solvatisierenden Polymer und mindestens einer aprotischen polaren Verbindung oder von einem solvatisierenden Polymer gebildet ist.

15. Verfahren nach Anspruch 14, **dadurch gekennzeichnet, dass** die aprotische polare Verbindung aus den linearen oder cyclischen Carbonaten, den linearen oder cyclischen Ethern, den linearen oder cyclischen Ester, den linearen oder cyclischen Sulfonen, den Sulfamiden und den Nitrilen ausgewählt ist.

16. Verfahren nach Anspruch 14, **dadurch gekennzeichnet, dass** das nicht solvatisierende Polymer ausgewählt ist aus:
• den Homopolymeren und den Copolymeren von Vinylidenfluorid,
• den Copolymeren von Ethylen, von Propylen und eines Diens,
• den Homopolymeren und den Copolymeren von Tetrafluorethylen,
• den Homopolymeren und den Copolymeren von N-vinyl-pyrrolidon,
• den Homopolymeren und den Copolymeren von Acrylonitril,
• den Homopolymeren und den Copolymeren von Methacrylnitril.

17. Verfahren nach Anspruch 14, **dadurch gekennzeichnet, dass** das nicht solvatisierende Polymer ionische Funktionen trägt.

18. Verfahren nach Anspruch 14, **dadurch gekennzeichnet, dass** das Bindemittel ein solvatisierendes Polymer ist, ausgewählt aus den Polyethern mit linearer, Kamm- oder Blockstruktur, die ein Netzwerk bilden oder nicht, auf der Basis von Poly(Ethylenoxid); den Copolymeren, die das Ethylenoxidmotiv oder Propylenoxid oder Allylglycidylether enthalten; den Polyphosphazenen; den vernetzten Netzen auf der Basis von Polyethylenglycol, vernetzt durch Isocyanate; den Copolymeren von Oxyethylen und von Epichlorhydrin und den Netzen, erhalten durch Polykondensation und Gruppen tragend, die die Inkorporierung von vernetzbaren Gruppen erlauben.

19. Verfahren nach einem der Ansprüche 8 und 11, **dadurch gekennzeichnet, dass** die Verbindung, die elektronische Leiteigenschaften verleiht, vorzugsweise ein Carbonschwarz ist, das nicht die Oxidation des Elektrolyten mit hohem Potential katalysiert.

20. Verfahren nach einem der Ansprüche 8 oder 11, **dadurch gekennzeichnet, dass** das Verbundmaterial ferner ein flüssiges, nicht flüchtiges organisches Lösungsmittel enthält.

21. Verfahren nach Anspruch 20, **dadurch gekennzeichnet, dass** das flüssige Lösungsmittel ausgewählt ist aus:
• den aprotischen polaren Verbindungen wie den linearen oder cyclischen Carbonaten, den linearen oder cyclischen Ethern, den linearen oder cyclischen Estern, den linearen oder cyclischen Sulfonen, den Sulfamiden und den Nitrilen,
• den Phtalaten wie dem Dioctylphtalat, dem Dibutylphtalat und dem Dimethylphtalat,
• einem Polyethylenglycol oder Poly(ethylenglycol)dimethylether geringer Masse.

22. Verfahren nach Anspruch 1, **dadurch gekennzeichnet, dass** der Polyether des Films, der bestimmt ist, den Elektrolyten zu bilden, ein Copolymer ist, umfassend vernetzbare Einheiten, und dass mindestens eine der Elektroden von einem Verbundmaterial gebildet ist, das ferner ein Vernetzungsmittel für den Polyether enthält.

## Claims

1. Method for preparing an electrochemical device composed of a polyether/lithium salt electrolyte film between two films respectively forming the positive electrode and negative electrode, consisting of assembling a multilayer structure comprising a current collector support, a film intended to form the positive electrode, a polyether film intended to form the electrolyte and a film intended to form the negative electrode, **characterized in that**:
• the film intended to form the positive electrode and/or the film intended to form the negative electrode are formed of a composite material containing the lithium salt;
• the polyether film intended to form the electrolyte does not contain lithium salt and is obtained by extrusion;
• the films respectively forming the negative electrode, positive electrode and electrolyte have thicknesses of between 10 µm and 150 pm;
• the assembled device is left to stand for sufficient time to allow the lithium salt contained in the material of the positive electrode and/or in the material of the negative electrode to diffuse into the polymer film.

2. The method according to claim 1, **characterized in that** the polyether is selected from among copolymers obtained from ethylene oxide and at least one substituted oxirane, and which comprise at least 70 % of recurrent -CH₂-CH₂O- units derived from ethylene oxide.

3. The method according to claim 2, **characterized in that** the polyether comprises -O-CH₂-CHR- units derived from an oxirane C̅H̅₂̅ -̅ C̅H̅R̅ -̅ O̅ where R is an alkyl radical.

4. The method according to claim 3, **characterized in that** R is an alkyl radical having 1 to 16 carbon atoms.

5. The method according to claim 2, **characterized in that** the polyether comprises -O-CH₂CHR' units derived from an oxirane C̅H̅₂̅ -̅ C̅H̅R̅'̅ -̅O̅ where R' is a group capable of polymerising via radical route.

6. The method according to claim 5, **characterized in that** said group capable of radical polymerisation is selected from among those which comprise a vinyl, allyl, vinylbenzyl or acryloyl group.

7. The method according to claim 2, **characterized in that** the polyether comprises recurring units derived from various substituted oxiranes.

8. The method according to claim 1, **characterized in that** the composite material of the film intended to form the positive electrode comprises an active substance, a binder, a material imparting electronic conductivity, and lithium salt.

9. The method according to claim 8, **characterized in that** the positive electrode active substance is selected from among Li₁₊ₓV₃O₈, 0<x<4, LiₓV₂O₅,nH₂O, 0<x<3, 0<n<2, LiFePO₄, iron phosphates and sulfates whether or not hydrated, vanadyl phosphates and sulfates whether or not hydrated, LiMn₂O₄, compounds derived from ZiMn₂O₄ obtained by partial substitution of Mn by Al, Ni and7or Co, LiMnO₂, the compounds derived from LiMnO₂ obtained by partial substitution of Mn by Al, Ni and/or Co, LiCoO₂, the compounds derived from LiCoO₂ obtained by partial substitution of Li by Al, Ti Mg, Ni and/or Mn, LiNiO₂, and the compounds derived from LiNiO₂ by partial substitution of Ni by Al, Ti, Mg and/or Mn.

10. The method according to claim 1, **characterized in that** the film forming the negative electrode is a lithium film.

11. The method according claim 1, **characterized in that** the film intended to form the negative electrode is formed of a composite material comprising an active substance, a binder, a material imparting electronic conductivity, and lithium salt.

12. The method according to claim 11, **characterized in that** the active substance is selected from among:
• carbon compounds;
• alloys with lithium of type LiₓM with M=Sn, Sb, Si obtained from SnO, from SnO₂, from Sn compounds, Sn-Fe(-C), from Si compounds, from Sb compounds; or
• the compounds LiₓCu₆Sn₅, 0<x<13, iron borates, pnictides, single oxides with reversible decomposition, and insertion oxides such as titanates, MoO₃ or WO₃.

13. The method according to one of claims 1, 8 and 11, **characterized in that** the lithium salt is selected from among LiPF₆, LiAsF₆, LiClO₄, LiBF₄, LiC₄BO₈, Li(C₂F₅SO₂)₂N, Li[(C₂F₅)₃PF₃], LiCF₃SO₃, LiCH₃SO₃ and LiN (SO₂CF₃)₂.

14. The method according to one of claims 8 or 11, **characterized in that** the binder is formed either by a non-solvating polymer and at least one aprotic polar compound, or by a solvating polymer.

15. The method according to claim 14, **characterized in that** the aprotic polar compound is selected from among linear or cyclic carbonates, linear or cyclic ethers, linear or cyclic esters, linear or cyclic sulfones, sulfamides and nitriles.

16. The method according to claim 14, **characterized in that** the non-solvating polymer is selected from among:
• homopolymers and copolymers of vinylidene fluoride;
• copolymers of ethylene, propylene and a diene;
• homopolymers and copolymers of tetrafluoroethylene;
• homopolymers and copolymers of N-vinyl-pyrrolidone;
• homopolymers and copolymers of acrylonitrile;
• homopolymers and copolymers of methacrylonitrile.

17. The method according to claim 14, **characterized in that** the non-solvating polymer carries ionic functions.

18. The method according to claim 14, **characterized in that** the binder is a solvating polymer selected from among poly(ethylene oxide) polyethers of linear, comb or block structure whether or not forming a network; copolymers containing the ethylene oxide or propylene oxide or allylglycidylether repeating unit; polyphosphazenes; polyethylene glycol crosslinked networks crosslinked with isocyanates; copolymers of oxyethylene and epichlorohydrin; and networks obtained by polycondensation and carrying groups allowing incorporation of crosslinkable groups.

19. The method according to any of claims 8 and 11, **characterized in that** the compound imparting electronic conduction properties is preferably a carbon black that does not catalyse oxidation of the electrolyte at high potential.

20. The method according to any of claims 8 or 11, **characterized in that** the composite material further comprises a non-volatile, liquid organic solvent.

21. The method according to claim 20, **characterized in that** said liquid solvent is selected from among:
• aprotic polar compounds such as linear or cyclic carbonates, linear or cyclic ethers, linear or cyclic esters, linear or cyclic sulfones, sulfamides and nitriles;
• phthalates such as dioctyl phthalate, dibutyl phthalate and dimethyl phthalate;
• a polyethylene glycol or poly(ethylene glycol) dimethyl ether of low molecular weight.

22. The method according to claim 1, **characterized in that** the polyether of the film intended to form the electrolyte is a copolymer comprising crosslinkable units, and **in that** at least one of the electrodes is composed of a composite material that also contains a crosslinking agent for said polyether.
